# FASCICULE DE BREVET EUROPEEN

(11) **EP 3 736 185 B1**
(45) Date de publication et mention de la délivrance du brevet: **23.03.2022**
(21) Numéro de dépôt: 20169063.3
(22) Date de dépôt: 09.04.2020
(51) Int. Cl.: B60T 8/17, B60T 8/32

(54) **PROCEDE DE PILOTAGE D'UN SYSTEME DE FREINAGE ELECTRIQUE ET SYSTEME DE FREINAGE ELECTRIQUE POUR AERONEF**
STEUERVERFAHREN EINES ELEKTRISCHEN BREMSSYSTEMS UND ELEKTRISCHES BREMSSYSTEM FÜR LUFTFAHRZEUG
METHOD FOR CONTROLLING AN ELECTRIC BRAKING SYSTEM AND ELECTRIC BRAKING SYSTEM FOR AIRCRAFT

(30) Priorité: 06.05.2019 FR 1904730
(43) Date de publication de la demande: 11.11.2020
(73) Titulaire: Safran Landing Systems, 78140 Vélizy-Villacoublay (FR)
(72) Inventeur: FREY, OLIVIER, 78140 VELIZY-VILLACOUBLAY (FR)
(74) Mandataire: Cabinet Beau de Loménie

(56) Documents cités:
- EP-A1- 2 312 721
- EP-A1- 3 176 083

## Description

### Domaine Technique

La présente invention concerne le domaine du freinage électrique dans les aéronefs.

### Technique antérieure

Un système de freinage électrique pour aéronef comprend notamment des actionneurs électromécaniques de frein (EMA) qui appliquent sélectivement un effort de freinage sur des organes de friction pour exercer un couple de freinage sur des roues respectives. L'actionneur électromécanique est constitué principalement d'un moteur électrique et d'une transmission mécanique dont un élément en translation constitue un poussoir permettant d'appliquer un effort de presse sur les organes de friction et de générer le couple de freinage. Un tel système de freinage est notamment divulgué dans les documents EP 2 544 931 et EP 3 176 083.

Lors de la réalisation d'un freinage, une commande électrique est envoyée au moteur électrique pour le mettre en mouvement, faire coulisser le poussoir vers les organes de friction et appliquer l'effort de presse.

Dans certaines situations de fonctionnement, le moteur électrique est amené à maintenir une position fixe pour appliquer un effort constant sur les organes de friction, se traduisant par une absence de rotation du moteur. Dans ces situations, le moteur est alimenté électriquement pour appliquer et maintenir l'effort de consigne par l'intermédiaire de l'application d'un couple moteur. Dans ce cas, le ou les bobinages constituant le moteur électrique peuvent être alimentés de façon continue par un courant moteur important pendant une durée longue, avec pour conséquence un échauffement des bobinages en raison des pertes par effet Joule. Afin d'éviter que cet échauffement conduise à une dégradation ou une destruction des bobinages, une solution consiste à les sur-dimensionner lors de la conception du moteur électrique. Cependant, ce surdimensionnement a un impact significatif sur la masse et l'encombrement du système de freinage.

Il existe, par conséquent, un besoin pour permettre à un moteur de système de freinage électrique d'appliquer un effort constant sans avoir à sur-dimensionner les bobinages.

### Exposé de l'invention

A cet effet, la présente invention propose un procédé de pilotage d'un système de freinage électrique pour aéronef comprenant une pluralité d'actionneurs électromécaniques aptes à appliquer un effort de freinage sur des organes de friction, chaque actionneur électromécanique comprenant un moteur électrique équipé d'un ou plusieurs bobinages, le système de freinage comprenant en outre au moins un module de puissance configuré pour envoyer à chaque bobinage de moteur électrique un courant de phase et au moins un module de commande configuré pour commander, en réponse à une consigne de freinage, l'envoi par le module de puissance d'un courant de phase de consigne déterminé en fonction de l'effort de freinage à appliquer, caractérisé en ce que le procédé comprend au moins une étape de variation du courant de phase transmis à chaque bobinage du moteur électrique de manière à faire osciller ledit courant de phase autour du courant de phase de consigne.

En faisant varier ainsi le courant de phase de consigne, le ou les bobinages du moteur de l'actionneur ne sont plus alimentés avec un courant continu, et ce même en cas d'une consigne de freinage correspondant à un maintien en position fixe de l'actionneur avec application d'un effort constant. Par conséquent, l'échauffement éventuel du ou des bobinages reste très limité, ce qui permet d'éviter les surdimensionnement des bobinages lors de la conception de l'actionneur électromécanique. Il est ainsi possible de concevoir des systèmes de freinage électriques ayant une masse et un encombrement réduits.

Selon une première caractéristique du procédé de l'invention, la consigne de freinage comprend une consigne de position de chaque actionneur électromécanique, la variation du courant de phase étant réalisée par application d'un mouvement oscillant autour de la consigne de position.

Selon une deuxième caractéristique du procédé de l'invention, la consigne de freinage comprend une consigne d'effort de chaque actionneur électromécanique, la variation du courant de phase étant réalisée par application d'un mouvement oscillant autour de la consigne d'effort de l'actionneur.

Selon une troisième caractéristique du procédé de l'invention, la variation du courant de phase est réalisée par application d'une modulation directement sur le courant de phase de consigne.

Selon une quatrième caractéristique du procédé de l'invention, la variation du courant de phase transmis à chaque bobinage du moteur électrique est réalisée en réponse à une détection d'une consigne de freinage comprenant une consigne en position fixe ou une consigne d'effort constant. La modulation du courant de phase est alors appliquée seulement dans les cas où la consigne de freinage est susceptible de créer un échauffement dans le ou les bobinages du moteur de l'actionneur.

L'invention a également pour objet un système de freinage électrique pour aéronef comprenant une pluralité d'actionneurs électromécaniques aptes à appliquer un effort de freinage sur des organes de friction, chaque actionneur électromécanique comprenant un moteur électrique équipé d'un ou plusieurs bobinages, le système de freinage comprenant en outre au moins un module de puissance configuré pour envoyer à chaque bobinage de moteur électrique un courant de phase et au moins un module de commande configuré pour commander, en réponse à une consigne de freinage, l'envoi par le module de puissance d'un courant de phase de consigne déterminé en fonction de l'effort de freinage à appliquer, caractérisé en ce que le système comprend des moyens de modulation configurés pour faire varier le courant de phase transmis à chaque bobinage du moteur électrique de manière à faire osciller ledit courant de phase autour du courant de phase de consigne.

De même que pour le procédé défini ci-avant, le système de freinage électrique de l'invention permet d'éviter d'alimenter le ou les bobinages du moteur avec un courant continu, et ce même en cas d'une consigne freinage correspondant à un maintien en position fixe de l'actionneur avec application d'un effort constant. L'échauffement éventuel du ou des bobinages reste donc très limité, ce qui permet de concevoir des systèmes de freinage électriques ayant une masse et un encombrement réduits car il n'y a plus de besoin de surdimensionnement.

Selon une première caractéristique du système de l'invention, la consigne de freinage comprend une consigne de position de chaque actionneur électromécanique, les moyens de modulation étant configurés pour appliquer un mouvement oscillant autour de la consigne de position.

Selon une deuxième caractéristique du système de l'invention, la consigne de freinage comprend une consigne d'effort de chaque actionneur électromécanique, les moyens de modulation étant configurés pour appliquer un mouvement oscillant autour de la consigne d'effort de l'actionneur.

Selon une troisième caractéristique du système de l'invention, les moyens de modulation sont configurés pour appliquer une modulation directement sur le courant de phase de consigne.

Selon une quatrième caractéristique du système de l'invention, les moyens de modulation sont configurés pour faire varier le courant de phase transmis à chaque bobinage du moteur électrique en réponse à une détection d'une consigne de freinage comprenant une consigne en position fixe ou une consigne d'effort constant.

### Brève description des dessins

[Fig. 1] La figure 1 est un schéma fonctionnel d'un système de freinage électrique pour aéronef selon un de réalisation de l'invention,
[Fig. 2] La figure 2 est une courbe montrant la position d'un poussoir d'un système de freinage électrique lors d'une consigne de position fixe et sans application de variation du courant de phase de consigne,
[Fig. 3] La figure 3 est une courbe montrant le courant de phase envoyé dans le ou les bobinages du moteur du poussoir de la figure 2,
[Fig. 4] La figure 4 est une courbe montrant la position d'un poussoir d'un système de freinage électrique lors d'une consigne de position fixe avec application d'un mouvement oscillant conformément à l'invention,
[Fig. 5] La figure 5 est une courbe montrant le courant de phase envoyé dans le ou les bobinages du moteur du poussoir de la figure 4.

### Description des modes de réalisation

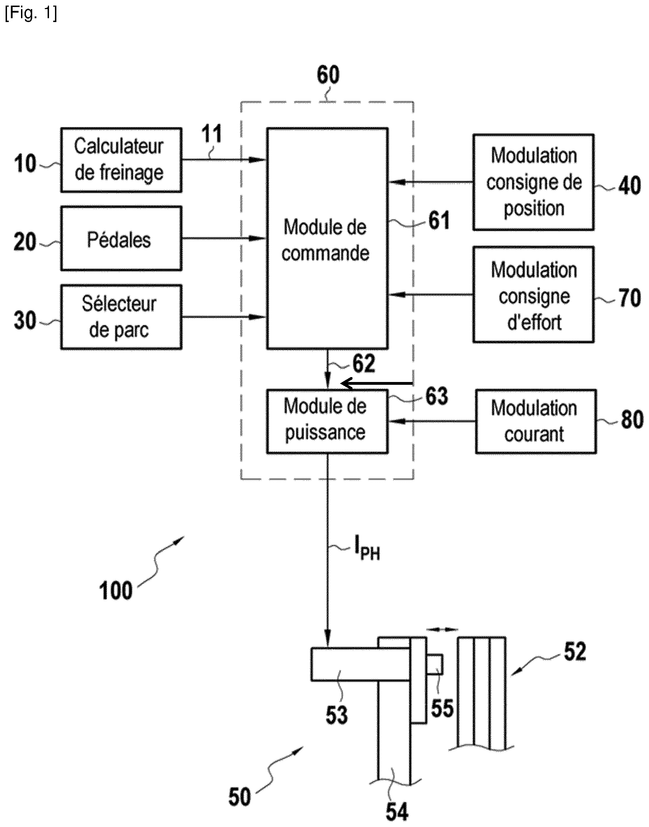

La figure 1 illustre un système de freinage électrique 100 qui comprend des freins électromécaniques 50 (un seul étant représentés sur la figure 1) comportant chacun une pile de disques 52 en tant qu'organes de friction. La pile de disques 52 comporte en alternance des disques solidaires en rotation d'une roue à freiner et des disques fixes en rotation. Chaque frein électromécanique 50 comprend en outre une pluralité d'actionneurs 53 (un seul est représenté ici) qui sont portés par une couronne 54 pour s'étendre en regard de la pile de disques 52. Chaque actionneur 53 comporte un poussoir 55 apte à être déplacé vers la pile de disques 52 pour presser celle-ci et ainsi générer un effort de freinage.

Le poussoir 55 est déplacé par un moteur électrique de l'actionneur via une chaîne cinématique transformant un mouvement de rotation du moteur électrique en un mouvement de translation du poussoir 55. Le moteur électrique comprend un ou plusieurs bobinages (non représentés sur la figure 1) qui sont alimentés par un contrôleur 60 comportant un module de puissance 63 qui délivre au(x) bobinage(s) du moteur de l'actionneur des courants de phase I_{PH} en fonction d'un ordre 62 délivré par un module de commande 61.

Les ordres délivrés par le module de commande 61 sont élaborés à partir de divers signaux venant en particulier d'un calculateur de freinage 10, d'une pédale de frein 20 ou d'un sélecteur de parc 30.

L'ensemble du système de freinage de l'aéronef peut fonctionner typiquement suivant plusieurs modes comme notamment un mode normal, un mode d'urgence, et un mode de parc.

Par souci de simplification, on ne décrira ici qu'un fonctionnement en mode normal dans lequel le module de commande 61 génère un ordre 62 en fonction d'une consigne de freinage 11 reçue d'un calculateur de freinage 10. La consigne de freinage 11 comprend une consigne de position du moteur de l'actionneur et une consigne d'effort de l'actionneur.

Conformément à l'invention, le système de freinage électrique comprend en outre des moyens de modulation configurés pour faire varier le courant de phase transmis à chaque bobinage du moteur électrique de manière à faire osciller ledit courant de phase autour du courant de phase de consigne, c'est-à-dire le courant correspondant à la consigne de freinage. La variation d'amplitude du signal de courant alternatif créé autour du courant de phase de consigne est faible en comparaison de la valeur du courant de phase de consigne afin de ne pas perturber l'effort de freinage commandé par la consigne de freinage. De même, la fréquence du signal de courant de phase ainsi modulé est choisie de manière à avoir un effet négligeable du point de vue du freinage. L'amplitude de la modulation autour de la consigne de freinage est de préférence de l'ordre de 0,5%. La fréquence de cette modulation est de préférence inférieure ou égale à 1hertz.

Selon une première caractéristique du système et du procédé de l'invention, la modulation du courant de phase est réalisée par application d'un mouvement oscillant autour de la consigne de position de l'actionneur. Dans l'exemple décrit ici, cette modulation est réalisée par un module 40 qui applique un mouvement oscillant autour de la consigne de position présente dans la consigne de freinage 11.

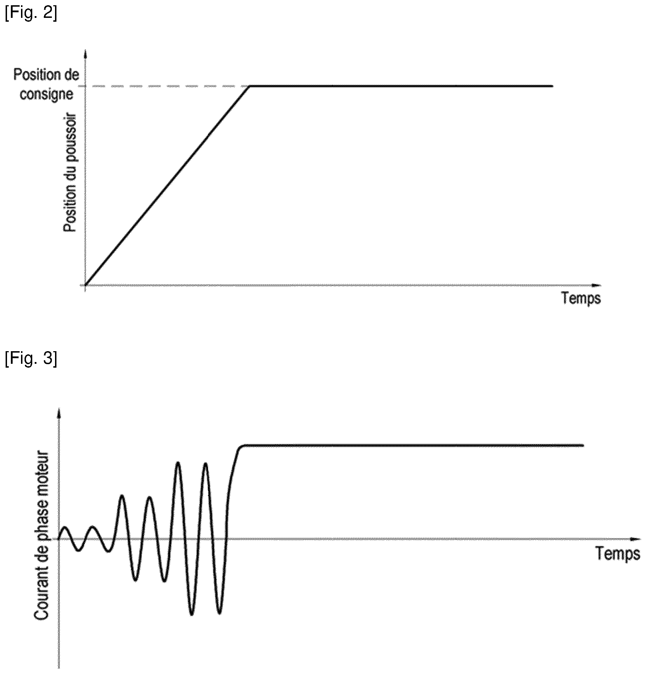

Les figures 2 et 3 illustrent respectivement la position du poussoir et le courant de phase transmis au moteur d'un actionneur comme l'actionneur 53 décrit ci-avant en fonction d'une consigne de position sans application d'une modulation autour de la consigne de position. Comme on peut le constater, dès que la position de consigne est atteinte par le poussoir, le ou les bobinages du moteur sont alimentés avec un courant de phase important et continu, et ce durant toute la période d'immobilisation du moteur en position. Cela provoque un échauffement important dans le ou les bobinages du moteur du fait des pertes par effet Joule.

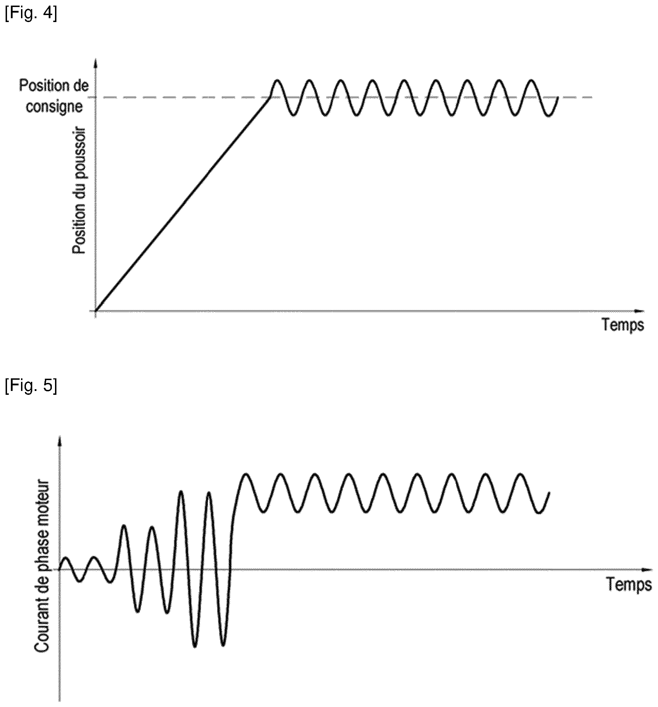

Les figures 4 et 5 illustrent respectivement la position du poussoir et le courant de phase transmis au moteur d'un actionneur comme l'actionneur 53 décrit ci-avant en fonction d'une consigne de position et avec application d'une modulation autour de la consigne de position. Sur la figure 4, on voit que la position du poussoir oscille autour de la position de consigne en réponse à l'application d'un mouvement oscillant sur la consigne de position qui peut être réalisée par exemple par le module 40. Cette oscillation se traduit par une variation du courant de phase de consigne envoyé à chaque bobinage du moteur comme illustré sur la figure 5. Le ou les bobinages du moteur de l'actionneur ne sont plus alimentés en courant de façon continue pendant la durée d'immobilisation en position du moteur, ce qui permet d'éviter un échauffement du ou des bobinages.

Selon une deuxième caractéristique du système et du procédé de l'invention, la modulation du courant de phase est réalisée par application d'un mouvement oscillant autour de la consigne d'effort de l'actionneur. Dans l'exemple décrit ici, cette modulation est réalisée par un module 70 qui applique un mouvement oscillant autour de la consigne d'effort présente dans la consigne de freinage 11.

Comme expliqué ci-avant pour la consigne en position du moteur, dès que l'effort de consigne que doit appliquer l'actionneur sur la pile de disques de freins via le poussoir est atteinte, le ou les bobinages du moteur sont alimentés avec un courant de phase important et continu, et ce durant toute la période d'application de l'effort. Cela provoque un échauffement important dans le ou les bobinages du moteur du fait des pertes par effet Joule.

Lors de l'application d'une modulation autour de la consigne d'effort, l'effort exercé par le poussoir oscille autour de l'effort de consigne en réponse à l'application d'un mouvement oscillant sur la consigne d'effort qui peut être réalisée par exemple par le module 70. Cette oscillation se traduit par une variation du courant de phase de consigne envoyé à chaque bobinage du moteur. Le ou les bobinages du moteur de l'actionneur ne sont plus alimentés en courant de façon continue pendant la durée d'immobilisation en position du moteur, ce qui permet d'éviter un échauffement du ou des bobinages.

Selon une troisième caractéristique du système et du procédé de l'invention, la modulation du courant de phase est réalisée par application d'une modulation directement sur le courant de phase de consigne. Cette modulation peut être réalisée par un module 80 qui applique un courant oscillant sur la valeur du courant de phase de consigne. Le ou les bobinages du moteur de l'actionneur ne sont plus alimentés en courant de façon continue pendant la durée d'immobilisation en position du moteur, ce qui permet d'éviter un échauffement du ou des bobinages.

Concernant les instants ou évènement de déclenchement de la modulation du courant de phase par application d'un mouvement oscillant autour de la consigne de position de l'actionneur, ou par application d'un mouvement oscillant autour de la consigne d'effort de l'actionneur, ou encore par application d'une modulation directement sur le courant de phase de consigne telles que décrites ci-avant, au moins deux options sont possibles.

Selon une première option, la modulation du courant de phase est mise en œuvre pour toute consigne de freinage non nulle, la modulation du courant de phase étant alors appliquée en permanence.

Selon une deuxième option, la variation du courant de phase transmis à chaque bobinage du moteur électrique est réalisée en réponse à une détection d'une consigne de freinage comprenant une consigne en position fixe ou une consigne d'effort constant. Les moyens de modulation du courant de phase sont alors configurés pour déclencher la modulation sur détection d'une consigne en position fixe ou une consigne d'effort constant, la modulation du courant de phase étant appliquée seulement dans les cas de consigne de freinage susceptibles de créer un échauffement dans le ou les bobinages du moteur de l'actionneur.

## Revendications

1. Procédé de pilotage d'un système de freinage électrique pour aéronef (100) comprenant une pluralité d'actionneurs électromécaniques (53) aptes à appliquer un effort de freinage sur des organes de friction (52), chaque actionneur électromécanique comprenant un moteur électrique équipé d'un ou plusieurs bobinages, le système de freinage comprenant en outre au moins un module de puissance (63) configuré pour envoyer à chaque bobinage de moteur électrique un courant de phase (I_{PH}) et au moins un module de commande (61) configuré pour commander, en réponse à une consigne de freinage (11), l'envoi par le module de puissance d'un courant de phase de consigne déterminé en fonction de l'effort de freinage à appliquer, **caractérisé en ce que** le procédé comprend la variation du courant de phase transmis à chaque bobinage du moteur électrique de manière à faire osciller ledit courant de phase autour du courant de phase de consigne.

2. Procédé selon la revendication 1, dans lequel la consigne de freinage (11) comprend une consigne de position de chaque actionneur électromécanique (53) et dans lequel la variation du courant de phase (I_{PH}) est réalisée par application d'un mouvement oscillant autour de la consigne de position.

3. Procédé selon la revendication 1, dans lequel la consigne de freinage (11) comprend une consigne d'effort de chaque actionneur électromécanique (53) et dans lequel la variation du courant de phase (I_{PH}) est réalisée par application d'un mouvement oscillant autour de la consigne d'effort de l'actionneur.

4. Procédé selon la revendication 1, dans lequel la variation du courant de phase (I_{PH}) est réalisée par application d'une modulation directement sur le courant de phase de consigne.

5. Procédé selon l'une quelconque des revendications 1 à 4, dans lequel la variation du courant de phase (I_{PH}) transmis à chaque bobinage du moteur électrique est réalisée en réponse à une détection d'une consigne de freinage comprenant une consigne en position fixe ou une consigne d'effort constant.

6. Système de freinage électrique pour aéronef (100) comprenant une pluralité d'actionneurs électromécaniques (53) aptes à appliquer un effort de freinage sur des organes de friction (52), chaque actionneur électromécanique comprenant un moteur électrique équipé d'un ou plusieurs bobinages, le système de freinage comprenant en outre au moins un module de puissance (63) configuré pour envoyer à chaque bobinage de moteur électrique un courant de phase (I_{PH}) et au moins un module de commande (61) configuré pour commander, en réponse à une consigne de freinage (11), l'envoi par le module de puissance d'un courant de phase de consigne déterminé en fonction de l'effort de freinage à appliquer, **caractérisé en ce que** le système comprend des moyens de modulation configurés pour faire varier le courant de phase transmis à chaque bobinage du moteur électrique de manière à faire osciller ledit courant de phase autour du courant de phase de consigne.

7. Système selon la revendication 6, dans lequel la consigne de freinage (11) comprend une consigne de position de chaque actionneur électromécanique (53) et dans lequel les moyens de modulation (40) sont configurés pour appliquer un mouvement oscillant autour de la consigne de position.

8. Système selon la revendication 6, dans lequel la consigne de freinage (11) comprend une consigne d'effort de chaque actionneur électromécanique (53) et dans lequel les moyens de modulation (70) sont configurés pour appliquer un mouvement oscillant autour de la consigne d'effort de l'actionneur.

9. Système selon la revendication 6, dans lequel les moyens de modulation (80) sont configurés pour appliquer une modulation directement sur le courant de phase de consigne.

10. Système selon l'une quelconque des revendications 6 à 9, dans lequel les moyens de modulation sont configurés pour faire varier le courant de phase (I_{PH}) transmis à chaque bobinage du moteur électrique en réponse à une détection d'une consigne de freinage comprenant une consigne en position fixe ou une consigne d'effort constant.

## Patentansprüche

1. Verfahren zur Steuerung eines elektrischen Bremssystems für Luftfahrzeuge (100), das eine Vielzahl von elektromechanischen Betätigungseinrichtungen (53) umfasst, die dazu geeignet sind, eine Bremskraft auf Reibungsorgane (52) anzuwenden, wobei jede elektromechanische Betätigungseinrichtung einen Elektromotor umfasst, der mit einer oder mehreren Wicklungen ausgerüstet ist, wobei das Bremssystem ferner mindestens ein Leistungsmodul (63), das dazu ausgestaltet ist, an jede Elektromotorwicklung einen Phasenstrom (I_{PH}) zu senden, und mindestens ein Befehlsmodul (61) umfasst, das dazu ausgestaltet ist, als Reaktion auf einen Bremseinstellwert (11) das Senden eines Einstellwert-Phasenstroms, der in Abhängigkeit von der anzuwendenden Bremskraft bestimmt wird, durch das Leistungsmodul zu befehlen, **dadurch gekennzeichnet, dass** das Verfahren die Veränderung des an jede Wicklung des Elektromotors übertragenen Phasenstroms umfasst, derart dass bewirkt wird, dass der Phasenstrom um den Einstellwert-Phasenstrom herum oszilliert.

2. Verfahren nach Anspruch 1, wobei der Bremseinstellwert (11) einen Positionseinstellwert von jeder elektromechanischen Betätigungseinrichtung (53) umfasst und wobei die Veränderung des Phasenstroms (I_{PH}) durch Anwendung einer Oszillationsbewegung um den Positionseinstellwert herum ausgeführt wird.

3. Verfahren nach Anspruch 1, wobei der Bremseinstellwert (11) einen Krafteinstellwert von jeder elektromechanischen Betätigungseinrichtung (53) umfasst und wobei die Veränderung des Phasenstroms (I_{PH}) durch Anwendung einer Oszillationsbewegung um den Krafteinstellwert der Betätigungseinrichtung herum ausgeführt wird.

4. Verfahren nach Anspruch 1, wobei die Veränderung des Phasenstroms (I_{PH}) durch Anwendung einer Modulation direkt auf den Einstellwert-Phasenstrom ausgeführt wird.

5. Verfahren nach einem der Ansprüche 1 bis 4, wobei die Veränderung des Phasenstroms (I_{PH}), der an jede Wicklung des Elektromotors übertragen wird, als Reaktion auf eine Feststellung eines Bremseinstellwerts ausgeführt wird, der einen Einstellwert in der festen Position oder einen konstanten Krafteinstellwert umfasst.

6. Elektrisches Bremssystem für Luftfahrzeuge (100), das eine Vielzahl von elektromechanischen Betätigungseinrichtungen (53) umfasst, die geeignet sind, eine Bremskraft auf Reibungsorgane (52) anzuwenden, wobei jedes elektromechanische Betätigungsorgan einen Elektromotor umfasst, der mit einer oder mehreren Wicklungen ausgerüstet ist, wobei das Bremssystem ferner mindestens ein Leistungsmodul (63), das dazu ausgestaltet ist, an jede Elektromotorwicklung einen Phasenstrom (I_{PH}) zu senden, und mindestens ein Befehlsmodul (61) umfasst, das dazu ausgestaltet ist, als Reaktion auf einen Bremseinstellwert (11) das Senden eines Einstellwert-Phasenstroms, der in Abhängigkeit von der anzuwendenden Bremskraft bestimmt wird, durch das Leistungsmodul zu befehlen, **dadurch gekennzeichnet, dass** das System Modulationsmittel umfasst, die dazu ausgestaltet sind, die Veränderung des an jede Wicklung des Elektromotors übertragenen Phasenstroms zu bewirken, derart dass bewirkt wird, dass der Phasenstrom um den Einstellwert-Phasenstrom herum oszilliert.

7. System nach Anspruch 6, wobei der Bremseinstellwert (11) einen Positionseinstellwert von jeder elektromechanischen Betätigungseinrichtung (53) umfasst und wobei die Modulationsmittel (40) dazu ausgestaltet sind, eine Oszillationsbewegung um den Positionseinstellwert herum anzuwenden.

8. System nach Anspruch 6, wobei der Bremseinstellwert (11) einen Krafteinstellwert jeder elektromechanischen Betätigungseinrichtung (53) umfasst und wobei die Modulationsmittel (70) dazu ausgestaltet sind, eine Oszillationsbewegung um den Krafteinstellwert der Betätigungseinrichtung herum anzuwenden.

9. System nach Anspruch 6, wobei die Modulationsmittel (80) dazu ausgestaltet sind, eine Modulation direkt auf den Einstellwert-Phasenstrom anzuwenden.

10. System nach einem der Ansprüche 6 bis 9, wobei die Modulationsmittel dazu ausgestaltet sind, zu bewirken, dass der Phasenstrom (I_{PH}) verändert wird, der an jede Wicklung des Elektromotors als Reaktion auf eine Feststellung eines Bremseinstellwerts gesendet wird, der einen Einstellwert in der festen Position oder einen konstanten Krafteinstellwert umfasst.

## Claims

1. A control method for an electrical braking system for aircraft (100) comprising a plurality of electromechanical actuators (53) capable of applying a braking force on friction members (52), each electromechanical actuator comprising an electric motor equipped with one or more windings, the braking system further comprising at least one power module (63) configured to send to each electric motor winding a phase current (I_{PH}) and at least one control module (61) configured to control, in response to a braking setpoint (11), the sending by the power module of a setpoint phase current determined depending on the braking force to be applied, **characterized in that** the method comprises the variation of the phase current transmitted to each winding of the electric motor so as to cause said phase current to oscillate around the setpoint phase current.

2. The method according to claim 1, wherein the braking setpoint (11) comprises a position setpoint of each electromechanical actuator (53) and wherein the variation of the phase current (I_{PH}) is accomplished by application of an oscillating movement around the position setpoint.

3. The method according to claim 1, wherein the braking setpoint (11) comprises a force setpoint of each electromechanical actuator (53) and wherein the variation of the phase current (I_{PH}) is accomplished by application of an oscillating movement around the force setpoint of the actuator.

4. The method according to claim 1, wherein the variation of the phase current (I_{PH}) is accomplished by application of a modulation directly to the setpoint phase current.

5. The method according to any one of claims 1 to 4, wherein the variation of the phase current (I_{PH}) transmitted to each winding of the electric motor is accomplished in response to a detection of a braking setpoint comprising a fixed position setpoint or a constant force setpoint.

6. An electrical braking system for aircraft (100) comprising a plurality of electromechanical actuators (53) capable of applying a braking force on friction members (52), each electromechanical actuator comprising an electric motor equipped with one or more windings, the braking system further comprising at least one power module (63) configured to send to each electric motor winding a phase current (I_{PH}) and at least one control module (61) configured to control, in response to a braking setpoint (11), the sending by the power module of a setpoint phase current determined depending on the braking force to be applied,
**characterized in that** the system comprises modulation means configured to cause the phase current transmitted to each winding of the electric motor to vary so as to cause said phase current to oscillate around the setpoint phase current.

7. The system according to claim 6, wherein the braking setpoint (11) comprises a position setpoint of each electromechanical actuator (53) and wherein the modulation means (40) are configured to apply an oscillating movement around the setpoint position.

8. The system according to claim 6, wherein the braking setpoint (11) comprises a force setpoint of each electromechanical actuator (53) and wherein the modulation means (70) are configured to apply an oscillating movement around the force setpoint of the actuator.

9. The system according to claim 6, wherein the modulation means (80) are configured to apply a modulation directly to the setpoint phase current.

10. The system according to any one of claims 6 to 9, wherein the modulation means are configured to cause the phase current (I_{PH}) transmitted to each winding of the electric motor to vary in response to a detection of a braking setpoint comprising a fixed position setpoint or a constant force setpoint.
